# EUROPEAN PATENT SPECIFICATION

(11) **EP 2 976 519 B1**
(45) Date of publication and mention of the grant of the patent: **08.05.2019**
(21) Application number: 14769893.0
(22) Date of filing: 12.03.2014
(51) Int. Cl.: F02M 37/10, B60K 15/03, F02M 37/18, F02M 37/22, F02M 37/00

(54) **FUEL SYSTEM FOR COMBUSTION ENGINE AND A METHOD FOR CONTROLLING A FUEL SYSTEM**
BRENNSTOFFSYSTEM FÜR BRENNKRAFTMASCHINE UND VERFAHREN ZUR STEUERUNG EINES BRENNSTOFFSYSTEMS
CIRCUIT DE CARBURANT POUR MOTEUR À COMBUSTION ET PROCÉDÉ SERVANT À COMMANDER UN CIRCUIT DE CARBURANT

(30) Priority: 22.03.2013 SE 1350360
(43) Date of publication of application: 27.01.2016
(73) Proprietor: Scania CV AB, 151 87 Södertälje (SE)
(72) Inventor: CEDFORS, Dan, S-146 38 Tullinge (SE); FORSBERG, Carina, S-152 51 Södertälje (SE); FOGELBERG, Patrik, S-141 92 Huddinge (SE); JONSSON, Anders, S-147 34 Tumba (SE)
(86) International application number: PCT/SE2014/050303
(87) International publication number: WO 2014/148987

(56) References cited:
- EP-A2- 1 154 149
- WO-A1-2004/037595
- WO-A1-2004/037595
- DE-A1-102010 043 644
- US-A1- 2011 088 800
- US-B1- 6 659 122
- US-B1- 7 546 835

## Description

### BACKGROUND OF THE INVENTION AND PRIOR ART

The present invention pertains to a fuel system for a combustion engine and a method to control a fuel system according to the respective preambles of the enclosed independent patent claims. The invention also pertains to a combustion engine and a motor vehicle according to the dependent patent claims.

A combustion engine, such as a diesel engine or an Otto engine, is equipped with a fuel system to transport fuel from one or several fuel tanks to the combustion engine's injection system. The fuel system comprises one or several fuel pumps which may be driven mechanically by the combustion engine or be driven by an electric engine. The fuel pumps create a fuel flow and pressure to transport the fuel to the combustion engine's injection system, which supplies the fuel to the combustion engine's combustion chamber.

There are fuel systems, comprising a coarse mesh sieve which is arranged inside the fuel tank. These fuel systems may also comprise a main fuel filter arranged downstream of the main feed pump and upstream of a high pressure pump. The fuel is sucked up through the coarse mesh sieve, which catches and retains larger particles and impurities. The coarse mesh sieve is not always sufficient for pre-filtration of fuel, however, which entails that particles, such as sand and metal chips, may impact the main feed pump and cause operational disruptions in the fuel system. Where the vehicle operates in markets with fuel of extremely poor quality, this problem is particularly common. Pre-filtration of fuel before it reaches the main feed pump entails an improved fuel management and reduces the risk of operational disruptions in the fuel system.

According to prior art, a pre-filter is arranged upstream of a main feed pump to pre-filter the fuel.

Document US 2011/0088800 A1 shows a fuel system for a combustion engine which comprises a main feed pump and a so-called primer pump. The primer pump is only activated when the fuel system lacks fuel or has insufficient fuel, e.g. before the engine starts. Downstream of the primer pump, a pre-filter is arranged which separates water occurring in the fuel and filters away impurities. The main feed pump subsequently sucks the fuel from the pre-filter, pressurises it and feeds it along to a fine mesh main fuel filter. Document US 2011/0088800 A1 thus shows a fuel system which pre-filters the fuel before it reaches the main feed pump.

Document US 2009/0159054 A1 shows a fuel system for a combustion engine, which comprises two fuel pumps. One of the pumps is a low pressure pump and the second pump is a high pressure pump. The high pressure pump pressurises the fuel and feeds it along to an accumulator, a so-called common rail. A pre-filter is arranged in the fuel pipe upstream of the low pressure pump, which entails that the fuel is sucked up through the pre-filter. Furthermore, the fuel system comprises a gas filter arranged downstream of the pre-filter and upstream of the low pressure pump. Both the pre-filter and the gas filter are metal filters designed to remove impurities in the fuel before the fuel reaches the low pressure pump. The low pressure pump then feeds the fuel along to a fine mesh main fuel filter. The pre-filter in document US 2009/0159054 A1 is thus a so-called suction filter, which has an increased risk of clogging because of the low pressure arising through the filter when the low pressure pump sucks the fuel through the filter.

Document DE 10 2010 043 644 A1 shows a fuel system comprising a first fuel tank and a second fuel tank. A transfer pump feeds the fuel from the first to the second tank. A pre-filter is installed directly upstream of the transfer pump.

Document EP 1 154 149 A2 suggests to locate a filter downstream of the fuel feed pump in order to have a higher rather than a lower pressure applied to the fuel filter. The fuel feed pump does not feed the fuel from a first to a second tank but from the tank to the high pressure pump of the engine.

Despite prior art solutions in this area, there is a need to develop a fuel system which reduces the risk of operational disruptions caused by impurities in the fuel.

### SUMMARY OF THE INVENTION

The objective of the present invention is to achieve a fuel system for a combustion engine which reduces the risk of operational disruptions caused by impurities in the fuel.

Another objective with the invention is to achieve a fuel system for a combustion engine which allows for a better fuel filtration than prior art.

Another objective of the invention is to achieve a fuel system for a combustion engine which reduces the risk of clogging in the fuel filter.

Another objective is to achieve a fuel system which is simple and non-bulky.

These objectives are achieved with the fuel system of the type specified at the beginning, and which is characterised by the features specified in the characterising portion of patent claim 1. Corresponding objectives are also achieved with a method to control a fuel system according to the characterising portion of patent claim 12. Corresponding objectives are also achieved with a combustion engine and a vehicle with such a fuel system.

By arranging a pre-filter downstream of a transfer pump driven by an electric engine in a low pressure circuit in the fuel system for a combustion engine, a fuel system is achieved which reduces the risk of operational disruptions caused by impurities in the fuel. Impurities in this context means non-desirable particles, objects and substances. The transfer pump's main task is to supply the first fuel tank with fuel, which occurs by the transfer pump feeding fuel from the second fuel tank through the pre-filter and via the first fuel pipe further to the first fuel tank. The fuel reaching the main feed pump controlled by the electric engine is thus pre-filtered, which entails that the main feed pump is protected against impurities in an advantageous manner, which reduces the risk of operational disruptions in the main feed pump.

When a fuel filter is partly clogged by particles, the transport of fuel from the fuel tanks to the combustion engine's injection system is impeded, since it is difficult for the fuel to pass through the fuel filter. Under certain operational conditions, paraffin occurring in the fuel also precipitates, and gets stuck in the fuel filter, further impeding the transport of fuel. If the fuel filter is arranged upstream of the fuel pump, the fuel pump sucks the fuel through the fuel filter. The low pressure at which the fuel passes through the fuel filter entails an increased risk of the fuel filter becoming clogged. By arranging a pre-filter downstream of the transfer pump, the fuel fed into the pre-filter is pressurised. The pressure arising entails that the fuel passes more easily through the pre-filter. In this manner, a fuel system is achieved, which reduces the risk of the pre-filter getting clogged.

Suitably, a coarse mesh sieve is arranged in the second fuel tank upstream of the transfer pump, so that the transfer pump sucks up the fuel in the second fuel tank through the coarse mesh sieve. Preferably, the coarse mesh sieve filters away particles above a potential predetermined size. In this manner, the fuel, which is transported to the first fuel tank, has been filtered in two steps before it reaches the main feed pump. Thus a fuel system is achieved with fuel filtration which is better than prior art, reducing the risk of operational disruptions caused by impurities in the fuel.

Preferably, the pre-filter comprises a fine mesh water-separating filter element. The fuel which finally reaches the combustion engine has thus been filtered through a fine mesh pre-filter and a fine mesh main fuel filter, a main fuel filter which is arranged downstream of the main feed pump. In this manner, a fuel system is achieved with fuel filtration which is better than prior art.

Suitably, a valve is arranged downstream of the transfer pump and downstream of the pre-filter. The valve has an inlet connected with the transfer pump, a first outlet connected with the first fuel pipe and a second outlet connected with the second fuel pipe, so that the transfer pump is connected with the first fuel pipe when the valve is arranged in a first position, and so that the transfer pump is connected with the second fuel pipe when the valve is arranged in a second position. In this manner, the first fuel tank may be bypassed and the transfer pump may feed fuel from the second fuel tank to the second fuel pipe, downstream of the first fuel tank and the main feed pump, and further to the combustion engine.

Preferably, the main feed pump, the transfer pump and the valve are connected to a control device via a CAN bus. Thus, a compact fuel system is achieved, which is easy to control and thus provides for a correct fuel supply to the combustion engine.

Suitably, the first fuel tank is designed to hold a lesser volume than the second fuel tank. Preferably, the first fuel tank holds 20-50 litres and the second fuel tank holds 300-1,000 litres. Thus, a non-bulky fuel system is achieved.

By arranging the main feed pump in the first fuel tank, the main feed pump is protected from the environment and a natural cooling of the fuel in the first fuel tank is obtained. Alternatively, the transfer pump, the pre-filter and the valve are also arranged inside the first fuel tank. With the main feed pump, the transfer pump, the pre-filter and the valve arranged inside the first fuel tank, a non-bulky fuel system is achieved.

Other characterising features and advantages of the invention are set out in the detailed description below.

### BRIEF DESCRIPTION OF DRAWINGS

Below is a description, as an example, of a preferred embodiment of the invention with reference to the enclosed drawings, in which:
- Fig. 1: shows a schematic side view of a vehicle, which comprises a fuel system for a combustion engine according to the present invention,
- Fig. 2: shows a coupling diagram for a fuel system according to the present invention, and
- Fig. 3: shows a flow chart of a method to control a fuel system according to the present invention.

### DETAILED DESCRIPTION OF ONE EMBODIMENT ACCORDING TO THE INVENTION

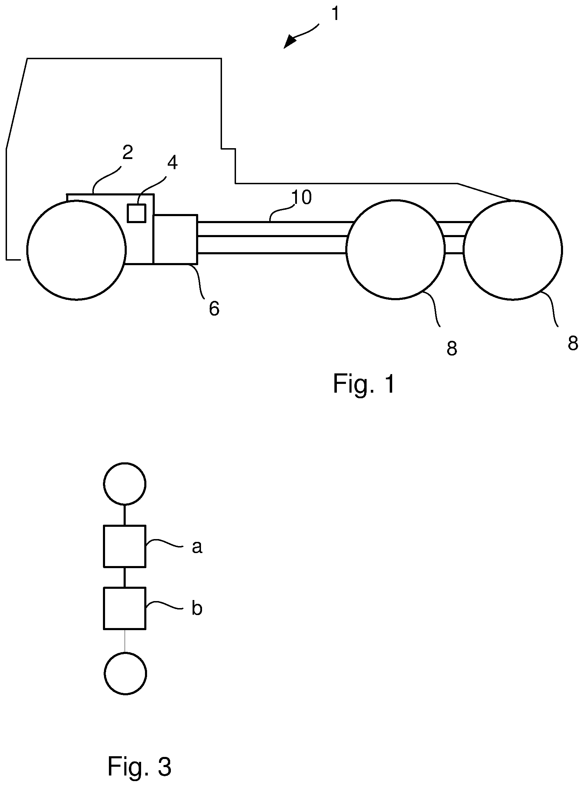

Fig. 1 shows a schematic side view of a vehicle 1, a vehicle which comprises a fuel system 4 for a combustion engine 2. The combustion engine 2 is connected to a gearbox 6, which is further connected to the vehicle's 1 driving wheels 8 via a transmission. The vehicle also comprises a chassis 10.

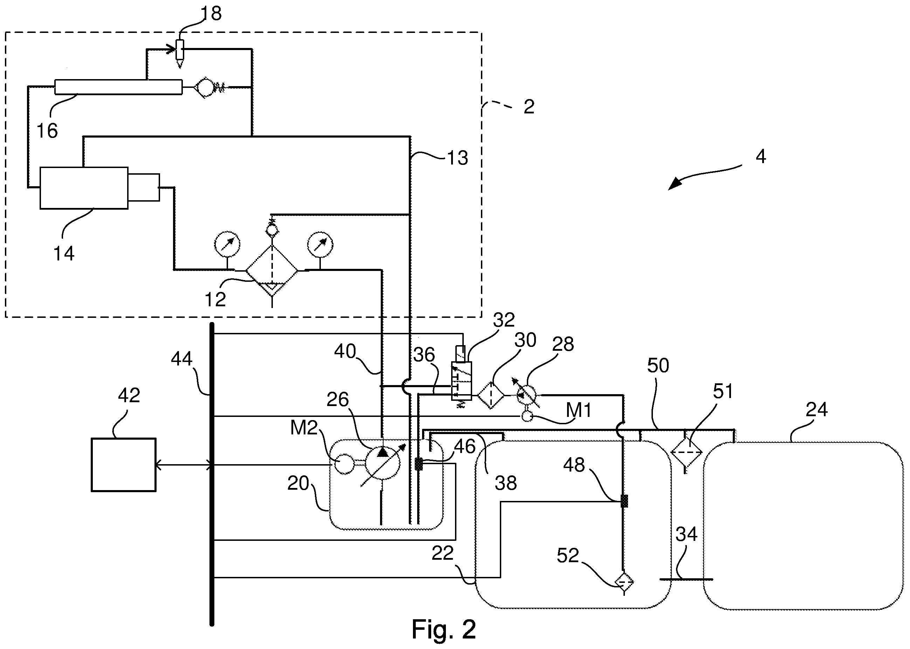

Fig. 2 shows a coupling diagram for the fuel system 4. The fuel system 4 comprises several components of which one main fuel filter 12, a high pressure pump 14, an accumulator in the form of a so-called common rail 16, and an injection system 18 schematically displayed in the form of a fuel injector are arranged in the combustion engine 2. Alternatively, the fuel system may be replaced by another form of an injection system, e.g. a piezo or a unit injection system. The fuel system 4 also comprises a first fuel tank 20, a second fuel tank 22, a third fuel tank 24, a main feed pump 26, a transfer pump 28, a pre-filter 30, and a valve 32. These components may be arranged at the vehicle's chassis 10. The main fuel filter 12 is arranged downstream of the main feed pump 26 and upstream of the high pressure pump 14 in the fuel system 4. Furthermore, the fuel system 4 comprises a reflux pipe 13, through which excess fuel re-flows from the injection system 18, the common rail 16, the high pressure pump 14 and the main fuel filter 12 back to the first fuel tank 20.

All three tanks 20, 22, 24 are in their respective upper parts connected with a ventilation pipe 50, which via an air filter 51 communicates with the environment. The ventilation pipe 50 ensures that the pressure in the respective tanks 20, 22, 24 is and remains the same and equal to the air pressure of the environment, regardless of how much fuel is in the respective tanks. The air filter 51 prevents impurities in the surrounding air from penetrating into the vent pipe 50 in connection with ventilation of the tanks.

The first fuel tank 20 is designed so that it holds a lesser volume than the second fuel tank 22 and the third fuel tank 24. The second fuel tank 22 and the third fuel tank 24 hold substantially the same volume and have a self-regulating flow between each other via a connection pipe 34 arranged between the lower part of the second fuel tank 22 and the third fuel tank 24. The transfer pump 28 is according to Fig. 2 arranged between the first fuel tank 20 and the second fuel tank 22. The transfer pump 28 is driven by a first electric engine M1 and its main task is to supply fuel from the second fuel tank 22 to the first fuel tank 20 via a first fuel pipe 36. Between the first fuel tank 20 and the second fuel tank 22 an excess pipe 38 is arranged, so that fuel may be transported across from the first fuel tank 20 to the second fuel tank 22 if the first fuel tank 20 becomes overfilled. The main feed pump 26 is arranged inside the first fuel tank 20 and is thus protected from the environment and cooled by the fuel. It is possible, however, to arrange the main feed pump 26 outside the first fuel tank 20. The main feed pump 26 is driven by a second electric engine M2, and feeds the fuel from the first fuel tank 20 via a second fuel pipe 40 through the main fuel filter 12 and further to the high pressure pump 14. The fuel is then fed, at a high pressure, to the common rail 16 and further along to the injection system 18. The main feed pump 26 and the transfer pump 28 are controlled by a control device 42 via a CAN bus 44.

The pre-filter 30 is arranged downstream of the transfer pump 28 and is preferably a fine mesh, water-separating filter. In the second fuel tank 22, upstream of the transfer pump 28, a coarse mesh sieve 52 is arranged, through which the transfer pump 28 sucks fuel. The coarse mesh sieve 52 filters away particles above a certain predetermined size. The transfer pump 28 then pressurises the fuel and then feeds it through the pre-filter 30, via the first fuel pipe 36, further along to the first fuel tank 20. The fuel in the first fuel tank 20 has thus passed both a coarse mesh sieve 52 and fine mesh pre-filter 30, which entails that the main feed pump 26, which is arranged in the first fuel tank 20, is protected against impurities. By arranging the pre-filter 30 downstream of the transfer pump 28, the fuel is pressed through the pre-filter 30, which entails that the fuel passes through the pre-filter 30 more easily, and the risk that the pre-filter 30 may become clogged is thus reduced.

The valve 32 is arranged downstream of the pre-filter 30 and comprises an inlet connected with the transfer pump 28, a first outlet connected with the first fuel pipe 36 and a second outlet connected with the second fuel pipe 40. The valve 32 is connected to the CAN bus 44, and is at an initial position controlled so that the transfer pump 28 is connected with the first outlet and is thus connected with the first fuel pipe 36. In a second position, the valve 32 is controlled so that the transfer pump 28 is connected with the second outlet and thus connected with the second fuel pipe 40. In this manner, the first fuel tank 20 may be bypassed and the transfer pump 28 may feed fuel from the second fuel tank 22 to the second fuel pipe 40, downstream of the first fuel tank 20 and the main feed pump 26, and further to the combustion engine 2.

In the first fuel tank 20, a first level sensor 46 is arranged to identify the fuel level in the first fuel tank 20. A second level sensor 48 is arranged in the second fuel tank 22 to identify the fuel level in the second fuel tank 22. The first level sensor 46 and the second level sensor 48 are connected to the CAN bus 44 and the control device 42, which controls the transfer pump 28 and the main feed pump 26.

Fig. 3 shows a flow chart of a method to control the fuel system 4. The method comprises the step (a) to supply the first fuel tank 20 with fuel by driving the transfer pump 28 with the first electric engine M1 to feed fuel from the second fuel tank 22 to the first fuel tank 20. The transfer pump 28 presses the fuel through the pre-filter 30, which is arranged downstream of the transfer pump 28 and further along through the first fuel pipe 36 to the first fuel tank 20. The fuel is thus filtered in a first step before the fuel reaches the main feed pump 26.

The method also comprises the step (b) to supply the combustion engine 2 with fuel by driving the main feed pump 26 with the second electric engine M2 to feed fuel from the first fuel tank 20 to the combustion engine 2. The main feed pump 26 feeds fuel through the main fuel filter 12, which is arranged downstream of the main feed pump 26, and the fuel is thus filtered in a second step before the fuel reaches the combustion engine 2.

The components and features specified above may within the framework of the invention be combined between different embodiments specified.

## Claims

1. Fuel system for a combustion engine (2), the fuel system (4) of which comprises a first fuel tank (20), a second fuel tank (22), a first fuel pipe (36) arranged in connection with the first fuel tank (20) and the second fuel tank (22), a second fuel pipe (40) arranged in connection with the first fuel tank (20), a main feed pump (26) and a transfer pump (28), in which the main feed pump (26) is arranged to feed fuel from the first fuel tank (20) through the second fuel pipe (40), and in which the transfer pump (28) is arranged to feed fuel from the second fuel tank (22) to the first fuel tank (20) via the first fuel pipe (36), **characterised in that** a first electric engine (M1) is arranged to drive the transfer pump (28) and that a second electric engine (M2) is arranged to drive the main feed pump (26), and **in that** a pre-filter (30) is arranged downstream of the transfer pump (28), so that the transfer pump (28) feeds pressurised fuel through the pre-filter (30).

2. Fuel system according to claim 1, **characterised in that** the pre-filter (30) is a water-separating fine mesh pressure fuel filter.

3. Fuel system according to either of claims 1 or 2, **characterised in that** a main fuel filter (12) is arranged downstream of the main feed pump (26).

4. Fuel system according to any of the previous claims, **characterised in that** the main feed pump (26) is arranged inside the first fuel tank (20).

5. Fuel system according to any of the previous claims, **characterised in that** the transfer pump (28) is arranged inside the first fuel tank (20).

6. Fuel system according to any of the previous claims, **characterised in that** the pre-filter (30) is arranged inside the first fuel tank (20).

7. Fuel system according to any of the previous claims, **characterised in that** a valve (32) is arranged downstream of the transfer pump (28) and downstream of the pre-filter (30), in which the valve (32) has an inlet connected with the transfer pump (28), a first outlet connected with the first fuel pipe (36) and a second outlet connected with the second fuel pipe (40), so that the transfer pump (28) is connected with the first fuel pipe (36) when the valve (32) is arranged in a first position, and so that the transfer pump (28) is connected with the second fuel pipe (40) when the valve (32) is arranged in a second position.

8. Fuel system according to any of the previous claims, **characterised in that** the first fuel tank (20) is designed to hold a lesser volume than the second fuel tank (22).

9. Fuel system according to any of the previous claims, **characterised in that** a coarse mesh sieve (52) is arranged inside the second fuel tank (22), the sieve (52) of which filters away particles above a certain predetermined size.

10. Combustion engine (2) **characterised in that** it comprises a fuel system (4) according to any of claims 1-9.

11. Vehicle (1) **characterised in that** it comprises a fuel system (4) according to one of the claims 1-9.

12. Method to control a fuel system (4) for a combustion engine (2), the fuel system (4) of which comprises: a first fuel tank (20), a second fuel tank (22), a first fuel pipe (36) arranged in connection with the first fuel tank (20) and the second fuel tank (22), a second fuel pipe (40) arranged in connection with the first fuel tank (20), a main feed pump (26) and a transfer pump (28), where the main feed pump (26) is arranged to feed fuel from the first fuel tank (20) through the second fuel pipe (40), and where the transfer pump (28) is arranged to feed fuel from the second fuel tank (22) to the first fuel tank (20) via the first fuel pipe (36),
**characterised by** the steps to:
a) supply the first fuel tank (20) with fuel by driving the transfer pump (28) with a first electric engine (M1) in order to feed fuel from the second fuel tank (22) to the first fuel tank (20), where the transfer pump (28) presses the fuel through a pre-filter (30), which is arranged downstream of the transfer pump (28), and further along through the first fuel pipe (36) to the first fuel tank (20),
b) supply the combustion engine (2) with fuel by driving the main feed pump (26) with a second electric engine (M2) in order to feed fuel from the first fuel tank (20) to the combustion engine (2), where the fuel is pressed through a main fuel filter (12) arranged downstream of the main feed pump (26), and then fed along to the combustion engine (2).

## Patentansprüche

1. Kraftstoffsystem für eine Brennkraftmaschine (2), deren Kraftstoffsystem (4) einen ersten Kraftstofftank (20), einen zweiten Kraftstofftank (22), eine erste Kraftstoffleitung (36), die in Verbindung mit dem ersten Kraftstofftank (20) und dem zweiten Kraftstofftank (22) angeordnet ist, eine zweite Kraftstoffleitung (40), die in Verbindung mit dem ersten Kraftstofftank (20) angeordnet ist, eine Hauptzuführpumpe (26) und eine Förderpumpe (28) umfasst, in dem die Hauptzuführpumpe (26) zum Zuführen von Kraftstoff vom ersten Kraftstofftank (20) durch die zweite Kraftstoffleitung (40) angeordnet ist, und in dem die Förderpumpe (28) zum Zuführen von Kraftstoff vom zweiten Kraftstofftank (22) zum ersten Kraftstofftank (20) über die erste Kraftstoffleitung (36) angeordnet ist, **dadurch gekennzeichnet, dass** ein erster Elektromotor (M1) zum Antreiben der Förderpumpe (28) angeordnet ist, und dass ein zweiter Elektromotor (M2) zum Antreiben der Hauptzuführpumpe (26) angeordnet ist, und dadurch, dass ein Vorfilter (30) der Förderpumpe (28) nachgelagert angeordnet ist, sodass die Förderpumpe (28) druckbeaufschlagten Kraftstoff durch den Vorfilter (30) zuführt.

2. Kraftstoffsystem nach Anspruch 1, **dadurch gekennzeichnet, dass** der Vorfilter (30) ein wasserabscheidender feinmaschiger Kraftstoffdruckfilter ist.

3. Kraftstoffsystem nach einem der Ansprüche 1 oder 2, **dadurch gekennzeichnet, dass** ein Hauptkraftstofffilter (12) der Hauptzuführpumpe (26) nachgelagert angeordnet ist.

4. Kraftstoffsystem nach einem der vorhergehenden Ansprüche, **dadurch gekennzeichnet, dass** die Hauptzuführpumpe (26) im Inneren des ersten Kraftstofftanks (20) angeordnet ist.

5. Kraftstoffsystem nach einem der vorhergehenden Ansprüche, **dadurch gekennzeichnet, dass** die Förderpumpe (28) im Inneren des ersten Kraftstofftanks (20) angeordnet ist.

6. Kraftstoffsystem nach einem der vorhergehenden Ansprüche, **dadurch gekennzeichnet, dass** der Vorfilter (30) im Inneren des ersten Kraftstofftanks (20) angeordnet ist.

7. Kraftstoffsystem nach einem der vorhergehenden Ansprüche, **dadurch gekennzeichnet, dass** ein Ventil (32) der Förderpumpe (28) nachgelagert und dem Vorfilter (30) nachgelagert angeordnet ist, in dem das Ventil (32) einen Einlass, der mit der Förderpumpe (28) verbunden ist, einen ersten Auslass, der mit der ersten Kraftstoffleitung (36) verbunden ist, und einen zweiten Auslass aufweist, der mit der zweiten Kraftstoffleitung (40) verbunden ist, sodass die Förderpumpe (28) mit der ersten Kraftstoffleitung (36) verbunden ist, wenn das Ventil (32) in einer ersten Position angeordnet ist, und sodass die Förderpumpe (28) mit der zweiten Kraftstoffleitung (40) verbunden ist, wenn das Ventil (32) in einer zweiten Position angeordnet ist.

8. Kraftstoffsystem nach einem der vorhergehenden Ansprüche, **dadurch gekennzeichnet, dass** der erste Kraftstofftank (20) so ausgelegt ist, dass er ein geringeres Volumen aufnimmt als der zweite Kraftstofftank (22).

9. Kraftstoffsystem nach einem der vorhergehenden Ansprüche, **dadurch gekennzeichnet, dass** ein grobmaschiges Sieb (52) im Inneren des zweiten Kraftstofftanks (22) angeordnet ist, wobei das Sieb (52) desselben Partikel oberhalb einer gewissen vorbestimmten Größe ausfiltert.

10. Brennkraftmaschine (2), **dadurch gekennzeichnet, dass** sie ein Kraftstoffsystem (4) nach einem der Ansprüche 1-9 umfasst.

11. Fahrzeug (1), **dadurch gekennzeichnet, dass** es ein Kraftstoffsystem (4) nach einem der Ansprüche 1-9 umfasst.

12. Verfahren zum Steuern eines Kraftstoffsystems (4) für eine Brennkraftmaschine (2), deren Kraftstoffsystem (4) umfasst: einen ersten Kraftstofftank (20), einen zweiten Kraftstofftank (22), eine erste Kraftstoffleitung (36), die in Verbindung mit dem ersten Kraftstofftank (20) und dem zweiten Kraftstofftank (22) angeordnet ist, eine zweite Kraftstoffleitung (40), die in Verbindung mit dem ersten Kraftstofftank (20) angeordnet ist, eine Hauptzuführpumpe (26) und eine Förderpumpe (28), wobei die Hauptzuführpumpe (26) zum Zuführen von Kraftstoff vom ersten Kraftstofftank (20) durch die zweite Kraftstoffleitung (40) angeordnet ist, und wobei die Förderpumpe (28) zum Zuführen von Kraftstoff vom zweiten Kraftstofftank (22) zum ersten Kraftstofftank (20) über die erste Kraftstoffleitung (36) angeordnet ist,
**gekennzeichnet durch** die Schritte zum:
a) Beliefern des ersten Kraftstofftanks (20) mit Kraftstoff durch Antreiben der Förderpumpe (28) mit einem ersten Elektromotor (M1), um Kraftstoff vom zweiten Kraftstofftank (22) an den ersten Kraftstofftank (20) zuzuführen, wobei die Förderpumpe (28) den Kraftstoff durch einen Vorfilter (30), der der Förderpumpe (28) nachgelagert angeordnet ist, und weiter durch die erste Kraftstoffleitung (36) zum ersten Kraftstofftank (20) drückt,
b) Beliefern der Brennkraftmaschine (2) mit Kraftstoff durch Antreiben der Hauptzuführpumpe (26) mit einem zweiten Elektromotor (M2), um Kraftstoff vom ersten Kraftstofftank (20) an die Brennkraftmaschine (2) zuzuführen, wobei der Kraftstoff durch einen Hauptkraftstofffilter (12) gedrückt wird, der der Hauptzuführpumpe (26) nachgelagert angeordnet ist, und dann weiter an die Brennkraftmaschine (2) zugeführt wird.

## Revendications

1. Circuit de carburant pour un moteur à combustion (2), dont le circuit de carburant (4) comprend un premier réservoir de carburant (20), un second réservoir de carburant (22), une première conduite de carburant (36) disposée en liaison avec le premier réservoir de carburant (20) et le second réservoir de carburant (22), une seconde conduite de carburant (40) disposée en liaison avec le premier réservoir de carburant (20), une pompe d'alimentation principale (26) et une pompe de transfert (28), dans lequel la pompe d'alimentation principale (26) est disposée pour alimenter en carburant le premier réservoir de carburant (20) par la seconde conduite de carburant (40) et dans laquelle la pompe de transfert (28) est disposée pour amener le carburant du second réservoir de carburant (22) jusqu'au premier réservoir de carburant (20) par la première conduite de carburant (36), **caractérisé en ce qu'**un premier moteur électrique (M1) est disposé pour entraîner la pompe de transfert (28) et qu'un second moteur électrique (M2) est disposé pour entraîner la pompe d'alimentation principale (26) et **en ce qu'**un préfiltre (30) est disposé en aval de la pompe de transfert (28), de sorte que la pompe de transfert (28) alimente le carburant sous pression à travers le préfiltre (30).

2. Circuit de carburant selon la revendication 1, **caractérisé en** en ce que le préfiltre (30) est un filtre à carburant sous pression à mailles fines de séparation d'eau.

3. Circuit de carburant selon l'une des revendications 1 ou 2, **caractérisé en ce qu'**un filtre à carburant principal (12) est disposé en aval de la pompe d'alimentation principale (26).

4. Circuit de carburant selon l'une quelconque des revendications précédentes, **caractérisé en** en ce que la pompe d'alimentation principale (26) est disposée à l'intérieur du premier réservoir de carburant (20).

5. Circuit de carburant selon l'une quelconque des revendications précédentes, **caractérisé en** en ce que la pompe de transfert (28) est disposée à l'intérieur du premier réservoir de carburant (20).

6. Circuit de carburant selon l'une quelconque des revendications précédentes, **caractérisé en ce que** le préfiltre (30) est disposé à l'intérieur du premier réservoir de carburant (20).

7. Circuit de carburant selon l'une quelconque des revendications précédentes, **caractérisé en ce qu'**une soupape (32) est disposée en aval de la pompe de transfert (28) et en aval du préfiltre (30), dans lequel la soupape (32) a une admission raccordée à la pompe de transfert (28), une première évacuation raccordée à la première conduite de carburant (36) et une seconde évacuation raccordée à la seconde conduite de carburant (40), de sorte que la pompe de transfert (28) est raccordée à la première conduite de carburant (36) lorsque la soupape (32) est disposée dans une première position, et de sorte que la pompe de transfert (28) est raccordée à la seconde conduite de carburant (40) lorsque la soupape (32) est disposée dans une seconde position.

8. Circuit de carburant selon l'une quelconque des revendications précédentes, **caractérisé en ce que** le premier réservoir de carburant (20) est conçu pour contenir un volume inférieur à celui du second réservoir de carburant (22).

9. Circuit de carburant selon l'une quelconque des revendications précédentes, **caractérisé en ce qu'**un tamis à mailles larges (52) est disposé à l'intérieur du second réservoir de carburant (22), dont le tamis (52) élimine les particules au-dessus d'une certaine taille prédéterminée.

10. Moteur à combustion (2) **caractérisé en ce qu'**il comprend un circuit de carburant (4) selon l'une quelconque des revendications 1 à 9.

11. Véhicule (1) **caractérisé en ce qu'**il comprend un circuit de carburant (4) selon l'une des revendications 1 à 9.

12. Procédé de commande d'un circuit de carburant (4) pour un moteur à combustion (2), ce système (4) comprenant :
un premier réservoir de carburant (20), un second réservoir de carburant (22), une première conduite de carburant (36) disposée en liaison avec le premier réservoir de carburant (20) et le second réservoir de carburant (22), une seconde conduite de carburant (40) disposée en liaison avec le premier réservoir de carburant (20), une pompe d'alimentation principale (26) et une pompe de transfert (28), où la pompe d'alimentation principale (26) est disposée pour alimenter en carburant le premier réservoir de carburant (20) à travers la seconde conduite d'alimentation en carburant (40) et où la pompe de transfert (28) est disposée pour amener le carburant du second réservoir de carburant (22) jusqu'au premier réservoir de carburant (20) à travers la première conduite de carburant (36),
**caractérisé par** les étapes suivantes :
a) l'alimentation du premier réservoir de carburant (20) en carburant en entraînant la pompe de transfert (28) avec un premier moteur électrique (M1) afin d'amener le carburant du second réservoir de carburant (22) jusqu'au premier réservoir de carburant (20), où la pompe de transfert (28) presse le carburant à travers un préfiltre (30), qui est disposé en aval de la pompe de transfert (28), et au-delà à travers le première conduite de carburant (36) jusqu'au premier réservoir de carburant (20),
b) l'alimentation du moteur à combustion (2) en carburant en entraînant la pompe d'alimentation principale (26) avec un second moteur électrique (M2) afin d'alimenter en carburant le premier réservoir de carburant (20) jusqu'au moteur à combustion (2), où le carburant est pressé à travers un filtre à carburant principal (12) disposé en aval de la pompe d'alimentation principale (26), puis amené le long du moteur à combustion (2).
